# EUROPEAN PATENT APPLICATION

(11) **EP 2 378 671 A1**
(43) Date of publication of application: **19.10.2011**
(21) Application number: 08878667.8
(22) Date of filing: 12.12.2008
(51) Int. Cl.: H04B 7/005

(54) **FRAME AGGREGATING METHOD IN MOBILE COMMUNICATION SYSTEM**

(71) Applicant: Alcatel Lucent, 75008 Paris (FR)
(72) Inventor: LIANG, Xuejun, Shanghai 201206 (CN); LIU, Yang, Shanghai 201206 (CN); DUAN, Jun, Shanghai 201206 (CN)
(74) Representative: 2SPL Patentanwälte
(86) International application number: PCT/CN2008/001999
(87) International publication number: WO 2010/066067

(57) **Abstract**

A method for staggered frame aggregation in a multi-band time division duplex mobile communication system is provided. Frames in different frequency bands are temporally staggered by shifting each frame in each frequency band with respect to the corresponding frame in a preceding frequency band and then combining into a new frame structure for data transmission and reception.

## Description

### FIELD OF THE INVENTION

The invention relates to a mobile communication technique, and more particularly, to a method for frame aggregation in a mobile communication system having multiple spectrums aggregated.

### BACKGROUND OF THE INVENTION

A Beyond 3G (B3G) mobile communication system can support a spectral bandwidth of up to 100MHz. These spectrums, which may be distributed over a number of discontinuous frequency bands, need to be combined together. Currently, this can be achieved by means of spectrum aggregation. That is, the system can transmit/receive data over a number of frequency bands depending on actual capability of its own. However, the spectrum aggregation may bring out a series of problems, such as compatibility with a single-band system, mapping from Media Access Control (MAC) layer to the physical (PHY) layer, design of frame structure, and the like.

A frame aggregation method can be used for designing the frame structure. That is, frames in individual frequency bands are combined to form a new frame structure in a particular manner depending on the duplex mode. A B3G mobile communication system can support two duplex modes: frequency division duplex (FDD) and time division duplex (TDD). In the FDD mode, the uplink and the downlink are divided with respect to frequency and the resources in a single link direction are temporally continuous. In contrast, in the TDD mode, the uplink and the downlink are divided with respect to time and the resources in a single link direction are temporally discontinuous. Thus, it is more complicated to incorporate Hybrid Automatic Repeat request (HARQ) and channel feedback techniques in a TDD system than in a FDD system. During the process of HARQ, the average round-trip time (RTT) may be longer due to the occurrence of wait time between the transmissions of data and ACK/NACK signals. Also, during channel feedback, such discontinuity in time domain may cause an increased interval between feedback information and uplink grant, which has an adverse impact on the effectiveness of the feedback information, especially for a user equipment moving at a high speed.

The specific reason behind the above problems is that the frame aggregation solution in the prior art employs a synchronous combination approach, in which frames in individual carrier bands are temporally synchronized and then combined into a new frame structure. In this way, the individual bands are the same in the uplink/downlink direction at any time. Thus, this solution is known as un-staggered frame aggregation. For a FDD system where the resources in a single direction are temporally continuous, uplink and downlink transmission can be carried out continuously, such that the HARQ and channel feedback processes can function properly. For a TDD system, however, this solution is not fully applicable since, with the aggregation, the system is still only capable of transmitting data in one direction at any time and the temporal discontinuity of the resources in a single direction has not been improved for the TDD system. In this case, the above problems associated with HARQ and channel feedback remain. In the following, the problems with the un-staggered frame aggregation will be detailed taking a Long Term Evolution (LTE) TDD system in the 3rd Generation Partnership Project (3GPP) as an example.

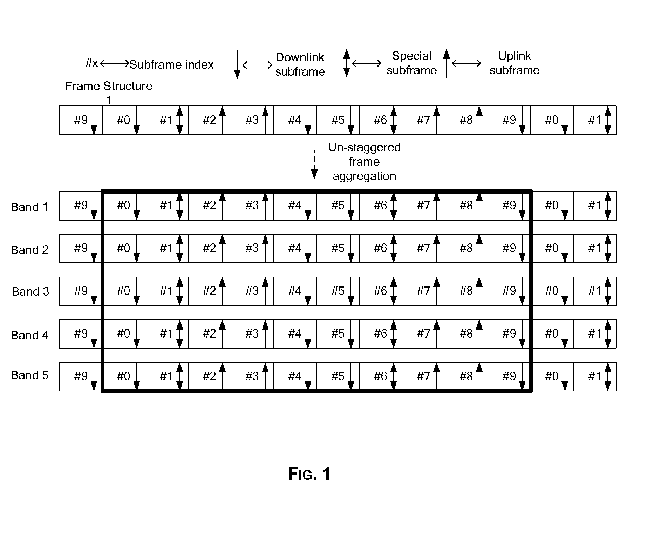

Fig. 1 shows an un-staggered aggregation for a LTE TDD frame structure 1. In the LTE TDD system, a frame, which has duration of 10ms and is composed of 10 sub-frames, supports two configuration periods, 5ms and 10ms, and seven different uplink-downlink ratios. As shown, a transmission of 100MHz bandwidth can be supported by aggregation of five 20MHz spectrums. The portion in black bold lines indicates the aggregated frame structure. It can be seen from Fig. 1 that each of the five frequency bands uses the LTE TDD frame structure 1. A LTE TDD user can use any one of the frequency bands to achieve backward compatibility. The uplink-downlink ratio remains unchanged after frame aggregation and there is no need for modification of control information. In this way, the specifications in LTE TDD standard can be maintained to the maximum extent.

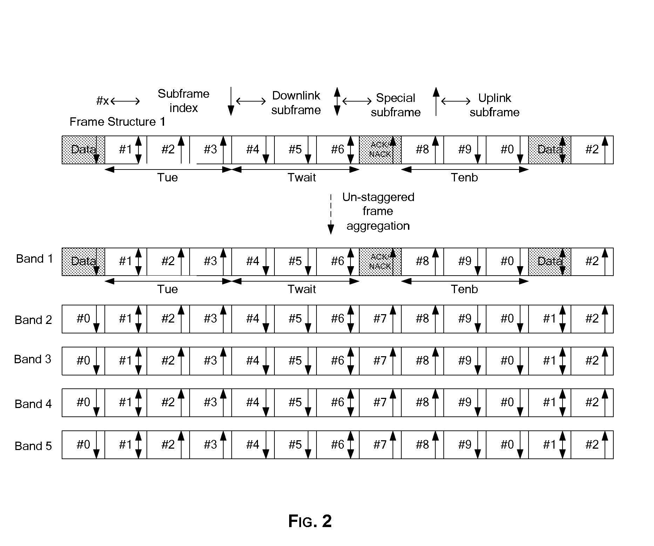

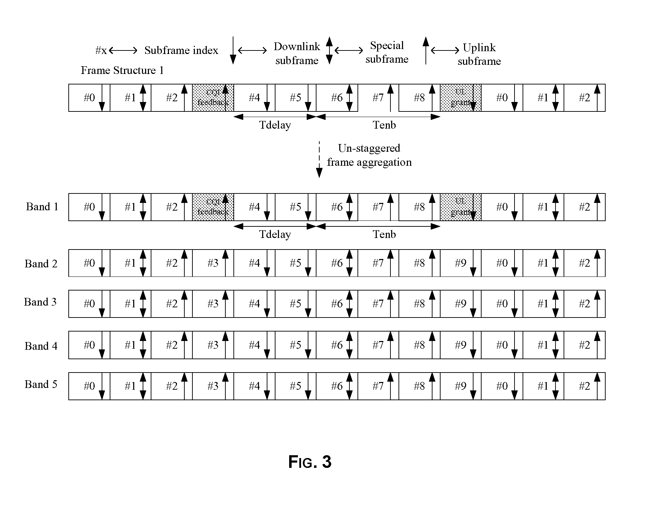

Figs. 2 and 3 show the HARQ and Channel Quality Information (CQI) feedback processes before and after application of the un-staggered frame aggregation, respectively. As shown in the gray portion of Fig. 2, the HARQ process does not change before and after frame aggregation. Data is first transmitted by a NodeB. After processing time Tue=3ms, an ACK/NACK signal should be transmitted by a user equipment. However, after the processing time of 3ms, the time slots in all frequency bands are downlink resources and the ACK/NACK signal can only be transmitted after wait time Twait=3ms when the resources are switched to uplink resources. After the user equipment transmits the ACK/NACK signal, it takes the NodeB processing time Tenb=3ms for confirmation. Thus, the entire HARQ process takes 11 ms. Therefore, the HARQ process in the TDD system does not change before and after frame aggregation and has a longer RTT and a larger proportion occupied by the wait time when compared with the HARQ process in the FDD system which takes 8ms.

Similar principle is applicable to the CQI feedback. As shown in the gray portion of Fig. 3, an uplink grant allocates uplink resources and modulation coding schemes to user equipments based on the latest CQI. Here, the processing time at the NodeB is Tenb=3ms. Thus, it is theoretically preferred that the time interval between the CQI feedback and the uplink grant is 3ms. However, in the LTE TDD frame structure, the interval between uplink and downlink sub-frames is not always 3ms, which results in a delay of Tdelay. With the increase of Tdelay, the CQI referenced by the uplink grant cannot accurately reflect the channel states for the user equipments. That is, the feedback may be outdated, particularly for a user equipment moving at a high speed. Therefore, the CQI feedback process in the TDD system does not change before and after frame aggregation and the delay problem is thus not mitigated.

The above problems also exist in other TDD mobile broadband systems.

### SUMMARY OF THE INVENTION

An object of the present invention is to provide a method for staggered frame aggregation, capable of mitigating or even eliminating the temporal discontinuity of resources in a single direction in a TDD system by temporally staggering frames in different frequency bands and combining them into a new frame structure.

According to the present invention, a method for combining frames in at least two frequency bands in a mobile communication system is provided, which comprises the steps of:
- setting, for each frame in each of the frequency bands other than a first frequency band, an offset X in time domain with respect to the corresponding frame in the preceding frequency band;
- shifting each frame in each of the frequency bands other than the first frequency band by the offset X with respect to the corresponding frame in the preceding frequency band for transmission; and
- combining the frames in all the frequency bands to be combined, so as to form a new frame for data transmission and reception.

According to the present invention, a method for data transmission by combining frames in at least two frequency bands in a mobile communication system is provided, which comprises the steps of:
- shifting each frame in each of the frequency bands other than a first frequency band by a predetermined fixed offset X in time domain with respect to the corresponding frame in the preceding frequency band for transmission; and
- transmitting, when a time slot in a frequency band is unavailable for data transmission in a particular direction, data in another time slot in another frequency band which is closest to the time slot in time domain and available for transmission in the direction.

According to the present invention, a combined frame for data transmission in a mobile communication system is provided, which is composed by frames in at least two frequency bands to be combined, wherein each frame in each of the frequency bands other than a first frequency bands is shifted by a predetermined offset X in time domain with respect to the corresponding frame in the preceding frequency band.

It can be seen from the entire frequency domain that, according to the staggered frame aggregation solution of the present invention, the resources in a single direction can be staggered and distributed over the respective time slots, such that the temporal discontinuity of resources in a single direction can be mitigated or even eliminated. In this way, it is possible to improve the HARQ process and reduce the time delay between the information feedback and the uplink grant, such that the effectiveness of the feedback information can be enhanced.

The other objects and effects of the present invention will be more apparent and a more comprehensive understanding of the present invention will be obtained with reference to the following descriptions and the claims taken in conjunction with the figures.

### BRIEF DESCRIPTION OF THE DRAWINGS

The present invention will be described in further detail now with reference to the figures, in which:
Fig. 1 shows an example in which a LTE TDD frame structure 1 is aggregated in an un-staggered manner;
Fig. 2 shows HARQ processes of a system before and after application of the un-staggered frame aggregation solution in Fig. 1;
Fig. 3 shows CQI feedback processes of a system before and after application of the un-staggered frame aggregation solution in Fig. 1;
Fig. 4 is a schematic diagram illustrating a principle of the staggered frame aggregation solution according to the present invention;
Fig. 5 shows a general embodiment of a frame structure aggregated with the staggered frame aggregation solution according to the present invention;
Fig. 6 shows an embodiment in which a LTE TDD frame structure 1 is aggregated in a staggered manner;
Fig. 7 shows HARQ processes of a system before and after application of the staggered frame aggregation solution in Fig. 6; and
Fig. 8 shows CQI feedback processes of a system before and after application of the staggered frame aggregation solution in Fig. 6.

### DETAILED DESCRIPTION OF PREFERRED EMBODIMENTS

In contrast to FDD, in a TDD system, the uplink/downlink resources are temporally discontinuous and it is thus impossible to implement the HARQ and channel feedback processes based on the continuity of uplink/downlink resources as in a FDD system. Thus, in design of a frame aggregation solution for a TDD system, it is necessary to fully consider the effect of the discontinuity and to mitigate or eliminate the temporal discontinuity of the resources in a single direction, so as to improve the HARQ process. It is also required to reduce the time delay between the information feedback and the uplink grant, so as to improve the effectiveness of the feedback information. In addition, the requirements of the asymmetric services in the future can be fulfilled by providing sufficient uplink-downlink time configuration ratios.

Further, it is desired that the design of a frame aggregation solution for a TDD system can maintain the specifications of existing TDD standards to the maximum extent and maintain a compatibility with a single-band system. That is, in order to evolve from the existing single-band TDD system to a multi-band TDD system smoothly, the frame aggregation solution needs to fulfill the compatibility requirement, such that a user equipment of the single-band TDD system can also be used in a multi-band TDD system.

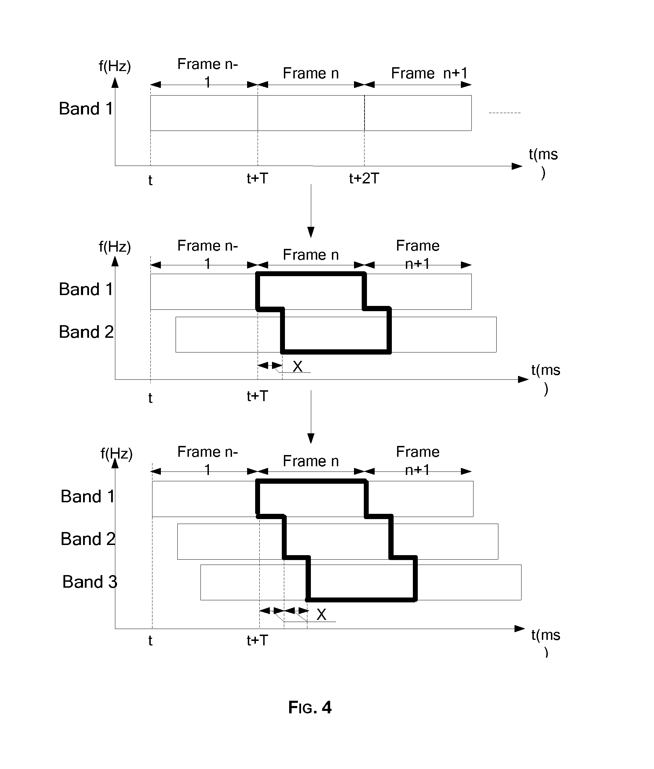

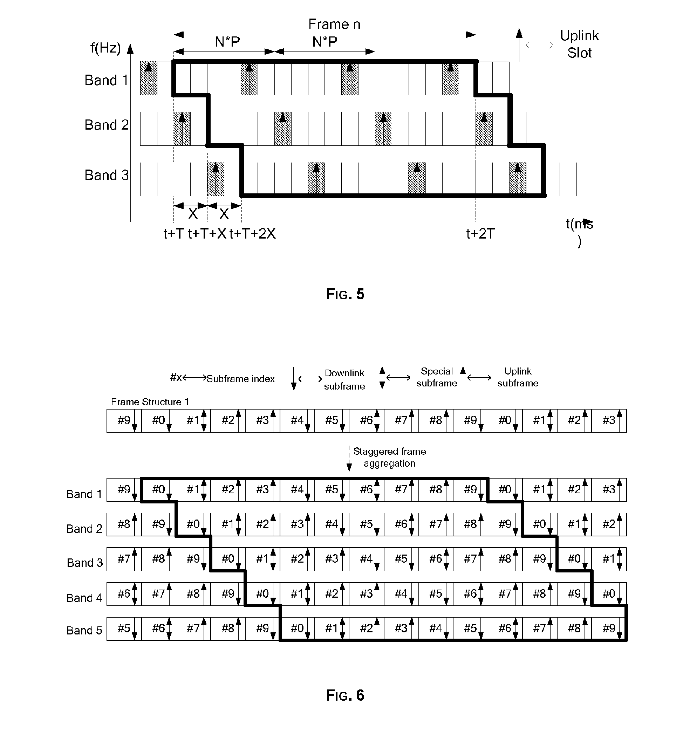

In view of the above factors and the characteristics of the TDD system, the frame aggregation solution according to the present invention still employs in all frequency bands the same frame structure as that of the single-band TDD system, with frames in different frequency bands staggered temporally and combined into a new frame structure. In this way, it is possible to transmit data in different directions over the respective frequency bands at the same time. Thus, it can be referred to as staggered frame aggregation. The detailed process of the staggered frame aggregation according to the present invention is shown in Figs. 4 and 5.

As shown in Fig. 4, it is assumed that the duration of one frame in the single-band TDD system is Tms. With the staggered frame aggregation, frames in each frequency band need to be shifted by Xms with respect to the frames in the preceding frequency band for transmission. That is, if the transmission of the n-th frame in the first frequency band starts at t+T and ends at t+2T, the transmission of the n-th frame in the second frequency band needs to be delayed by Xms and thus starts at t+T+X and ends at t+2T+X, the transmission of the n-th frame in the third frequency band is then starts at t+T+2X and ends at t+2T+2X, and so on. In the case where M frequency bands are aggregated, the transmission of the n-th frame in the M-th frequency band starts at t+T+(M-1)X and ends at t+2T+(M-1)X. The resulting new frame structure is shown in Fig. 4 in black bold lines.

Fig. 5 shows the aggregated frame structure. It is assumed that the uplink/downlink configuration period is N*Pms where N is the number of time slots and P is the length of one time slot. The following explanation will be given taking the uplink time slots shown in the gray portion of Fig. 5 as an example, although the same principle also applies to other time slots. Prior to frame aggregation, two uplink time slots in a single frequency band are spaced by N*Pms, which means that, if a single-band user equipment operating in the second frequency band misses a transmission of ACK/NACK signal or CQI feedback at t+T, it has to wait another N*Pms for the re-transmission. However, with the staggered frame aggregation according to the present invention, each frame in each frequency band is shifted by Xms with respect to the corresponding frame in the preceding frequency band. That is, in the entire frequency domain, an uplink time slot is available in the second frequency band at t+T, an uplink time slot is available in the third frequency band at t+T+X, and an uplink time slot is available in the first frequency band at t+T+2X. That is, if a user equipment capable of simultaneously operating in several frequency bands misses a transmission of ACK/NACK signal or CQI feedback in the second frequency band at t+T, it only has to wait another Xms for re-transmission with the uplink resources in the third frequency band. This is the beneficial effect from the staggered frame aggregation.

It can be seen that the performance of the staggered frame aggregation depends on the value of X. The optimal value of X should be set such that the resources in a single direction of the TDD system can be uniformly distributed over the entire configuration period. When M>N, X=P, i.e., the offset between frames in continuous frequency bands equals to the length of one time slot. In this way, it is possible to completely eliminate the temporal discontinuity of the resources in a single direction. When M≤N, X can be set as [N/M]*P where [.] denotes rounding operation. This situation is more complicated since there may be a plurality of uplink or downlink time slots within one configuration period in the actual frame structure. Thus, in the case where M≤N, the temporal discontinuity of the resources in a single direction may be completely eliminated by staggered frame aggregation, depending on the specific frame structure. Anyway, the staggered frame aggregation can at least shorten the temporal interval between resources in a single direction.

An embodiment of the staggered frame aggregation according to the present invention will be explained in the following taking the aggregation for the LTE TDD frame structure 1 having five carrier bands as an example. Of course, based on the same principle, the staggered frame aggregation according to the present invention also applies to other frame structures and other spectrum aggregation scenarios.

As shown in Fig. 6, an uplink/downlink configuration period for the LTE TDD frame structure 1 has a length of 5ms and includes five transmission sub-frames. In this case, X=5*1/5=1ms. Fig. 6 shows the staggered frame aggregation process in detail. As shown, each frequency band employs the LTE TDD frame structure 1 and each frame is shifted by 1ms with respect to the corresponding frame in a neighboring frequency band for aggregation. Each frequency band supports LTE TDD user equipments. The uplink-downlink ratio does not change before and after the frame aggregation, i.e., there are still two uplink frames and two downlink frames in sequence. Thus, it is still possible to represent the uplink-downlink ratio of the system by using 3-bit information in LTE TDD without any modification.

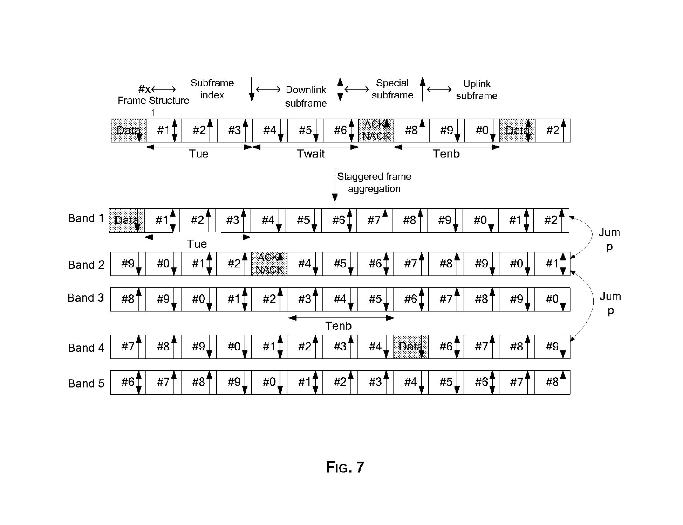

Fig. 7 shows the HARQ processes of a system before and after application of the staggered frame aggregation solution. It can be seen that, prior to the frame aggregation, the RTT of the downlink HARQ process comprises NodeB processing time Tenb=3ms, user equipment processing time Tue=3ms, wait time Twait=3ms and transmission time of 2ms. After application of the frame aggregation, if the user equipment needs to transmit an ACK/NACK signal during the downlink HARQ process and there is no uplink resource available in the current frequency band, it is possible to "jump" to a frequency band having available uplink resources to transmit the ACK/NACK signal without any wait time, i.e., Twait=0ms.

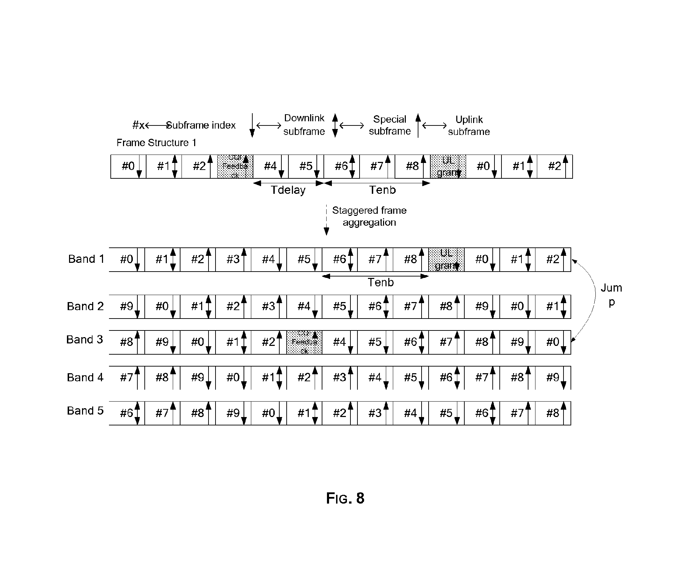

Likewise, Fig. 8 shows the CQI feedback processes of a system before and after application of the staggered frame aggregation solution. Before making a decision of uplink grant, the NodeB needs to allocate uplink resources and modulation coding schemes to the user equipment based on a valid CQI. The CQI can reflect the channel state of the user equipment more accurately with shorter intervals between the CQI feedback and the uplink grant. It is assumed that the time required for the NodeB to process the CQI is Tenb=3ms. Prior to application of the staggered frame aggregation, there is a time delay of Tdelay between the CQI feedback and the uplink grant. After application of the staggered frame aggregation, the uplink grant decision is transmitted in the first frequency band and the CQI fed back in the third frequency band is used. If there is no uplink resource available in the current frequency band, it is possible to "jump" to a frequency band having available uplink resources to perform CQI feedback, such that the time delay Tdelay can be eliminated and the NodeB can schedule in accordance with the latest CQI.

It can be seen that, after application of the staggered frame aggregation solution, the HARQ and CQI feedback processes can "jump" across a plurality of frequency bands. Such "jump" can be restricted for complexity reason. For example, the "jump" can be restricted by means of frequency band binding, such that the "jump" can only be carried out between frequency bands that are bound together. The specific binding operation can be designed such that the wait time Twait or the time delay Tdelay is minimized.

Additionally, with the staggered frame aggregation solution, special time slots in the LTE TDD frame structure 1 can be distributed to individual time instances. A special time slot is composed of three parts: UpPTS, DownPTS and GP, in which DownPTS contains a synchronization signal. Prior to frame aggregation, cell search needs to be performed at an interval of 5ms. However, after frame aggregation, the synchronization signals are temporally continuous. In this case, the user equipment can continuously search the synchronization signals in different frequency bands, such that the time required for a mobile terminal to access the network can be reduced. The same principle also applies to the random access signal in the UpPTS.

It can be seen from the above description that, with the staggered frame aggregation solution according to the present invention, the existing frame structure of the single-band TDD system can be applied in every frequency band, so as to achieve the backward compatibility. Also, the same frame structure is applied in every frequency band. The uplink/downlink configuration after frame aggregation remains the same as the single-band TDD system. Thus, it is unnecessary to change control information and basically fulfill the requirements of the future asymmetric services.

In the entire frequency domain, the resources in a single direction are staggered and distributed to the individual time slots, such that the temporal discontinuity of the resources in the single direction can be mitigated or even eliminated. For a TDD system operating in a plurality of frequency bands, it is possible to transmit uplink/downlink data at any time.

With the staggered frame aggregation solution of the present invention, the HARQ process can "jump" across a plurality of frequency bands, such that the wait time of the ACK/NACK signal can be reduced.

Similarly, with the staggered frame aggregation solution of the present invention, the CQI feedback process can "jump" across a plurality of frequency bands, such that the time interval between the uplink grant and the channel feedback can be reduced.

Additionally, the un-staggered aggregation in the prior art can be considered as a special instant of the staggered aggregation according to the present invention in which the X value is zero. Thus, the frame aggregation solutions for the TDD and the FDD modes can be unified in practice. With the development of hardware, the hardware processing speed at the NodeB and the user equipment will become increasingly faster and the processing time will be further reduced. In this case, the wait time and time delay will have more severe impact on the HARQ and channel feedback processes and the advantages of the staggered frame aggregation solution of the present invention will be more obvious.

It should be noted that the above embodiment are only intended for illustrating, rather than limiting, the present invention. Various modifications to the frame aggregation solution for the mobile communication system as disclosed here can be made by one skilled in the art without departing from the scope of the present invention. Thus, the scope of the present invention is only defined by the attached claims. Any reference signs cited in the claims should not be construed as limiting the scope of the claims.

## Claims

1. A method for combining frames in at least two frequency bands in a mobile communication system, comprising the steps of:
- setting, for each frame in each of the frequency bands other than a first frequency band, an offset X in time domain with respect to the corresponding frame in the preceding frequency band;
- shifting each frame in each of the frequency bands other than the first frequency band by the offset X with respect to the corresponding frame in the preceding frequency band for transmission; and
- combining the frames in all the frequency bands to be combined, so as to form a new frame for data transmission and reception.

2. The method according to claim 1, wherein if the number, M, of frequency bands to be combined is larger than the number, N, of time slots in each frame, the offset X is set as the length P of one time slot.

3. The method according to claim 1 or 2, wherein if the number, M, of frequency bands to be combined is equal to or smaller than the number, N, of time slots in each frame, the offset X is set as [N/M] times of the length P of one time slot where [.] denotes rounding operation.

4. The method according to claim 3, wherein the mobile communication system is a multi-band, time division duplex system.

5. A method for data transmission by combining frames in at least two frequency bands in a mobile communication system, comprising the steps of:
- shifting each frame in each of the frequency bands other than a first frequency band by a predetermined fixed offset X in time domain with respect to the corresponding frame in the preceding frequency band for transmission; and
- transmitting, when a time slot in a frequency band is unavailable for data transmission in a particular direction, data in another time slot in another frequency band which is closest to the time slot in time domain and available for transmission in the direction.

6. The method according to claim 6, wherein if the number, M, of frequency bands to be combined is larger than the number, N, of time slots in each frame, the offset X is set as the length P of one time slot.

7. The method according to claim 5 or 6, wherein if the number, M, of frequency bands to be combined is equal to or smaller than the number, N, of time slots in each frame, the offset X is set as [N/M] times of the length P of one time slot where [.] denotes rounding operation.

8. The method according to claim 7, wherein the mobile communication system is a multi-band, time division duplex system.

9. A combined frame for data transmission in a mobile communication system, composed by frames in at least two frequency bands to be combined, wherein each frame in each of the frequency bands other than a first frequency bands is shifted by a predetermined offset X in time domain with respect to the corresponding frame in the preceding frequency band.

10. The combined frame according to claim 9, wherein if the number, M, of frequency bands to be combined is larger than the number, N, of time slots in each frame, the offset X is set as the length P of one time slot.

11. The combined frame according to claim 9 or 10, wherein if the number, M, of frequency bands to be combined is equal to or smaller than the number, N, of time slots in each frame, the offset X is set as [N/M] times of the length P of one time slot where [.] denotes rounding operation.

12. The combined frame according to claim 11, wherein the mobile communication system is a multi-band, time division duplex system.
